# DEMANDE DE BREVET EUROPEEN

(11) **EP 1 628 063 A1**
(43) Date de publication de la demande: **22.02.2006**
(21) Numéro de dépôt: 04103939.7
(22) Date de dépôt: 17.08.2004
(51) Int. Cl.: F16L 23/14, F16L 23/032

(54) **Elément et procédé de liaison pour profilés métalliques**

(71) Demandeur: VENTILOGAINE S.A., 1027 Lonay (CH)
(72) Inventeur: REZA, M. Lorenzo, 1216, Cointrin (CH)
(74) Mandataire: Wenger, Joel-Théophile

(57) **Abrégé**

Le but de la présente invention est de proposer un élément et une méthode de liaison pour barres profilées utilisé dans la fabrication de cadres délimitant un troçon de conduit de ventilation. Ces éléments permettant un assemblage stable de barres profilées résistant à des contraintes telles que des chocs ou des vibrations sans pour autant recourir à des moyens de fixation supplémentaires comme des vis, des rivets, de la soudure etc.

Ce but est atteint par un élément de liaison pour profilés métalliques sous forme d'une plaque métallique rigide plane d'épaisseur généralement constante comprenant au moins une branche (2) comportant des tranches (2',2") parallèles prolongeant le plan de ladite plaque, ladite branche (2), étant destinée à s'emboîter dans une barre profilée (7) dont la forme de la section est adaptée à celle de la section de la branche (2) jusqu'a au moins une butée (4,4') solidaire de la branche (2), comporte une fenêtre (5) sur un côté de laquelle est attaché un ergot (3) masquant ladite fenêtre (5), l'extrémité dudit ergot (3) étant orientée vers l'extrémité de la branche (2), caractérisé
en ce que la partie dudit ergot (3) recouvrant la fenêtre (5) est sensiblement parallèle au plan de la plaque laissant un espace (6) séparant ledit plan et la partie inférieure dudit ergot (3),
en ce qu'au moins la partie dudit ergot (3) attachée au côté de la fenêtre comporte des arêtes vives,
et en ce que le point d'attache dudit ergot (3) à la fenêtre (5) est situé entre la butée (4,4') et l'extrémité de la branche (2) à une distance telle qu'une languette (9) pénétrant dans la fenêtre (5) est formée dans l'extrémité de la barre profilée (7) lors de l'assemblage de la ladite barre (7) sur la branche (2).

## Description

### Domaine technique

La présente invention concerne le domaine des éléments mécaniques servant à relier des barres profilées métalliques entre elles. Ces éléments sont utilisés dans diverses constructions métalliques nécessitant l'assemblage de barres profilées pour former par exemple une structure servant de support à des parois comme par exemple dans la construction de conduits de ventilation.

On entend par barre profilée ou "profilé" un élément métallique longiligne dont la section présente une forme complexe adaptée à l'application de la barre. Par exemple, selon des exécutions simples, une barre profilée peut présenter une section en forme de L, de U, de F, de E, de H etc.

### Art antérieur

La construction de conduits de ventilation exige d'une part, une bonne précision pour assurer l'étanchéité du conduit et d'autre part, une grande rigidité afin de pouvoir résister aux déformations dues à des pressions et à des débits d'air parfois élevés.

Un tel conduit présentant une section généralement rectangulaire ou carrée comprend quatre faces de tôle d'acier avec des extrémités se terminant par une arête vive. Pour relier deux de ces conduits, on fabrique un cadre formé de barres profilées qui sera monté sur les extrémités de chaque conduit. Ce cadre est destiné à être fixé sur un cadre correspondant fixé à l'extrémité de l'autre conduit. L'étanchéité est garantie par des joints de matière synthétique flexible, solidaires aux profilés, fermant les espaces entre lesdits profilés et les parois du conduit.

L'assemblage des barres profilées constituant le cadre est de préférence effectué par emboîtement et pressage dans des éléments de liaison formant les quatre coins du cadre. Ces éléments de liaison comportent des branches placées à angle droit dont la section est adaptée à celle de la barre profilée.

Le document US4252350 décrit un exemple où des éléments de liaison angulaires sont utilisés pour assembler un cadre pour conduit de ventilation avec des barres profilées. Les deux branches de l'élément formant un angle droit viennent chacune s'emboîter par pression dans les profilés aux quatre coins du cadre. Le document EP0795711 montre une variante où la fixation sur l'élément de liaison angulaire est effectuée au moyen d'un joint d'étanchéité en matière flexible et compressible.

Une autre solution généralement adoptée consiste à utiliser des éléments de liaison plans avec des branches munies de butées et de clips. Ces branches sont destinées à s'emboîter dans une barre profilée dont la forme de la section est adaptée celle de la section de la branche. Une branche d'un tel élément comporte d'une part deux tranches parallèles munies chacune d'une butée et d'autre part un clip situé sur l'axe de la branche. Les butées et le clip sont alignés de sorte que l'extrémité de la barre profilée emboîtée sur la branche s'appuie à la fois contre lesdites butées et contre le clip. Ce dernier joue le rôle d'une pince servant à retenir la barre profilée évitant ainsi l'emploi de vis ou d'autres éléments de maintien.

L'inconvénient principal de ces clips est que le profilé peut se déplacer, voire se dégager complètement de l'élément de liaison lors de vibrations ou de chocs contre les parois du conduit de ventilation. Ces événements se produisent par exemple lors de brusques variation de pressions et/ou de débit de l'air circulant dans le conduit.

### But de l'invention

Le but de la présente invention est de proposer un élément de liaison permettant un assemblage stable de barres profilées résistant à des contraintes telles que des chocs ou des vibrations sans pour autant recourir à des moyens de fixation supplémentaires comme des vis, des rivets, de la soudure etc.

### Résumé de l'invention

Ce but est atteint par un élément de liaison pour profilés métalliques sous forme d'une plaque métallique rigide plane d'épaisseur généralement constante comprenant au moins une branche comportant des tranches parallèles prolongeant le plan de ladite plaque, ladite branche, étant destinée à s'emboîter dans une barre profilée dont la forme de la section est adaptée à celle de la section de la branche jusqu'à au moins une butée solidaire de la branche, comporte une fenêtre sur un côté de laquelle est attaché un ergot masquant ladite fenêtre, l'extrémité dudit ergot étant orientée vers l'extrémité de la branche, caractérisé
en ce que la partie dudit ergot recouvrant la fenêtre est sensiblement parallèle au plan de la plaque laissant un espace séparant ledit plan et la partie inférieure dudit ergot,
en ce qu'au moins la partie dudit ergot attachée au côté de la fenêtre comporte des arêtes vives,
et en ce que le point d'attache dudit ergot à la fenêtre est situé entre la butée et l'extrémité de la branche à une distance de sorte qu'une languette pénétrant dans la fenêtre est formée dans l'extrémité de la barre profilée lors de l'assemblage de ladite barre sur la branche.

La fenêtre est localisée sensiblement sur l'axe longitudinal de la branche de la plaque destinée à s'emboîter dans une barre profilée et parallèlement aux bords de ladite branche.

Un élément de liaison destiné à relier deux barres profilées comportera deux branches munies chacune d'un ergot qui va découper une languette dans l'extrémité de chaque barre. Par exemple, si deux barres doivent être assemblées à angle droit l'une par rapport à l'autre, l'élément sera en forme générale de L dont chaque branche s'emboîte dans une extrémité d'une barre profilée.

Tout ou partie de la forme de la section du profilé est adaptée à la forme de la section de la branche de l'élément dans laquelle le profilé sera emboîté. La forme de cette section généralement rectangulaire est constituée par les deux faces et les deux tranches parallèles de la branche.

La présente invention propose également un procédé d'assemblage et de verrouillage d'une barre profilée sur l'élément de liaison, ladite barre ayant une section dont tout ou partie de la forme correspond à la forme de la section de la branche dudit élément de liaison sur laquelle la barre est emboîtée lors d'une étape préliminaire, caractérisé en ce qu'il comporte les étapes suivantes:
- engager la tranche de l'extrémité de la barre profilée dans l'espace séparant l'ergot du plan de la fenêtre jusqu'à ce que ladite tranche s'appuie sur le point d'attache de l'ergot à la fenêtre,
- exercer une force de poussée sur la barre profilée contre ledit ergot, ladite force entraînant la découpe d'une languette dans la face du profilé passant sous l'ergot, ladite languette guidée par ledit ergot s'enroule sur elle-même en se logeant dans la fenêtre sous ledit ergot.

Lorsque l'élément de liaison est emboîté dans une barre profilée en exerçant une force de poussée sur la barre, l'ergot découpe grâce à ses arêtes vives, une languette sur la face dans l'extrémité du profilé s'engageant dans l'espace entre la partie inférieure de l'ergot et la fenêtre. A mesure de l'avancement de la barre, cette languette, guidée par l'ergot, s'allonge et s'enroule sur elle-même en venant se loger dans la fenêtre sous l'ergot. La découpe et l'enroulement de la languette se terminent lorsque la barre profilée atteint les butées disposées sur les tranches de l'élément de liaison. La languette enroulée s'appuie finalement contre la face intérieure du profilé et contre les bords intérieurs de la fenêtre.

Le montage ainsi obtenu se révèle être très stable pratiquement sans jeu mécanique et de plus permanent car il est quasiment impossible de retirer la barre profilée sans la déformer ou la scier. Un autre avantage est qu'aucun outillage supplémentaire n'est nécessaire car tout le dispositif de fixation et de verrouillage se forme de lui-même uniquement sous la force de poussée exercée sur la barre lors de son assemblage sur l'élément de liaison.

L'invention sera mieux comprise grâce à la description détaillée qui va suivre et qui se réfère aux figures annexées données à titre d'exemples nullement limitatifs.

### Brève description des figures

La figure 1 illustre une vue de dessus d'une branche d'un élément de liaison.
La figure 2 illustre une vue en coupe de la branche de la figure 1 montrant l'ergot et la fenêtre.
La figure 3 illustre une vue de dessus d'une branche sur laquelle est assemblée une barre profilée.
La figure 4 illustre une vue en coupe de la branche de la figure 3 montrant une languette découpée par l'ergot dans la barre profilée et logée dans la fenêtre
La figure 5 illustre un exemple d'élément de liaison muni de deux branches placées à angle droit
La figure 6 illustre un cadre assemblé avec des barres profilées reliées avec des éléments de liaison selon l'invention.
La figure 7 illustre un tronçon de conduit de ventilation muni d'un cadre à chaque extrémité et un autre tronçon destiné à être couplé au premier par l'intermédiaire des cadres.

### Réalisations préférées de l'invention

Un élément de liaison servant à relier au minimum deux barres profilées comportera deux branches semblables disposées soit en tête-bêche l'une par rapport à l'autre pour raccorder deux profilés l'un dans le prolongement de l'autre, soit selon un certain angle dépendant de la forme du montage final.

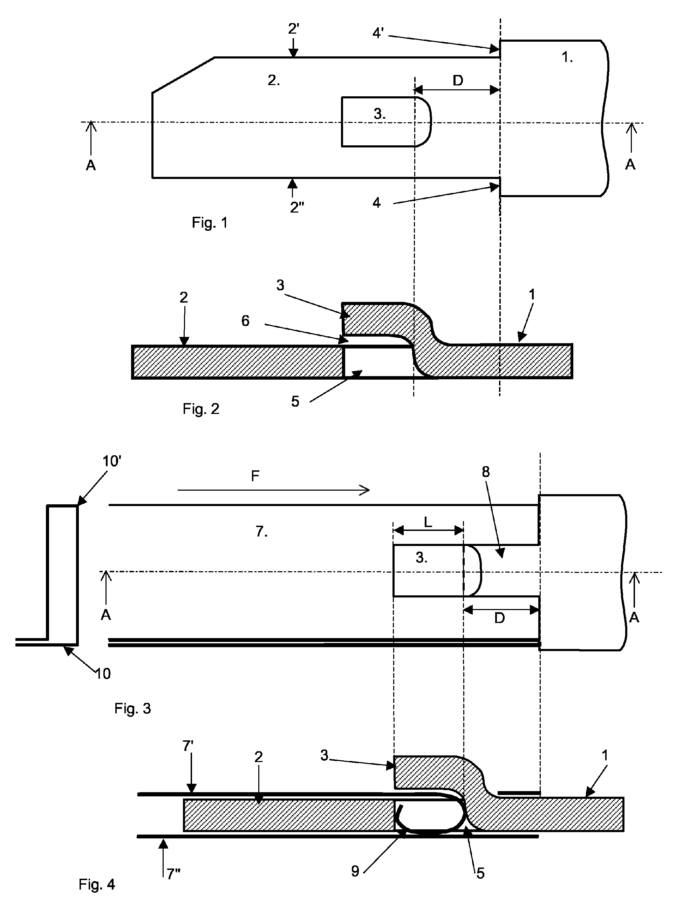

Pour des raisons de clarté, les figures 1 à 4 ne montrent qu'une seule branche (2) d'un élément de liaison (1) qui peut en comporter une ou plusieurs autres. On peut aisément imaginer d'autres configurations d'éléments de liaison par exemple avec des branches multiples disposées en X ou en Y ou encore avec des branches multiples qui ne sont pas toutes situées dans un même plan.

La figure 1 montre une vue de dessus d'une branche (2) faisant partie d'un élément de liaison (1) munie d'un ergot (3) et de butées (4, 4'). L'ergot (3) est de préférence situé sur l'axe de la branche (2) à égale distance des deux tranches parallèles (2', 2") et à une distance (D) prédéterminée des deux butées (4, 4'). Cette distance (D) est au moins équivalente à l'épaisseur de la plaque qui constitue l'élément de liaison et elle peut varier de 1 à quelques millimètres.

Dans un exemple de réalisation d'un élément angulaire mesurant 10 cm de côté avec des branches perpendiculaires d'environ 8 cm de longueur, de 2.5 cm de largeur, et de 3 mm d'épaisseur, la distance (D) entre le point d'attache de l'ergot (3) et les butées (4, 4') est d'environ 8 mm.

L'ergot (3) est toujours situé en avant par rapport aux butées (4, 4'), autrement dit la distance séparant l'arrière de l'ergot (3) de l'extrémité de la branche (2) est inférieure à celle séparant les butées (4, 4') de ladite extrémité. Les butées (4, 4') sont de préférence constituées par la différence de largeur de la branche (2) par rapport à celle de la plaque de l'élément de liaison (1), cette différence étant répartie symétriquement par rapport à l'axe de la branche (2).

L'extrémité de la branche (2) est, en général, biseautée pour faciliter l'insertion d'une barre profilée (7) comme le montre la figure 3.

La figure 2 montre une vue en coupe selon l'axe A-A de la branche (2) de l'élément de liaison (1). L'ergot (3) recouvrant une fenêtre (5) généralement rectangulaire traversant de part en part la branche (2) comprend une partie parallèle au plan de la fenêtre (5) et séparée de celui-ci par un espace (6). La largeur de cet espace dépend de l'épaisseur de la matière constituant la barre profilée (7) qui sera emboîtée sur la branche (2). De plus, un certain jeu mécanique subsiste lorsque le profilé (7) est engagé dans cet espace (6) dans le but de diminuer la force à exercer lors du verrouillage final du profilé (7).

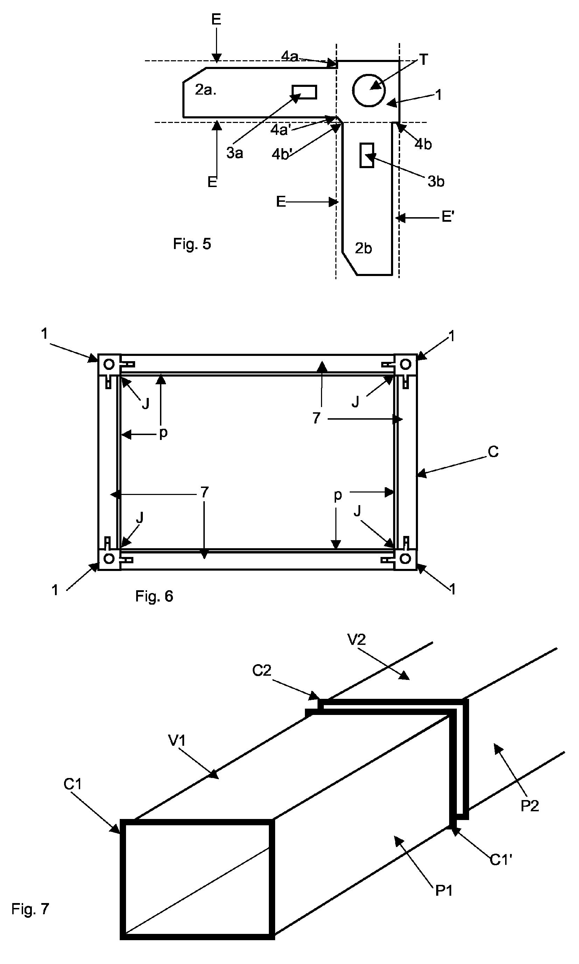

La figure 3 montre une vue de dessus d'une barre profilée (7) assemblée sur une branche (2) d'un élément de liaison (1) et qui s'appuie sur les butées (4, 4'). La section de la barre profilée (10) comprend une partie (10') dont la forme et les dimensions sont proches de la section de la branche (2). Une autre partie de cette section peut correspondre par exemple à la partie du profilé servant à supporter les parois (P) du conduit de ventilation et des joints d'étanchéité, voir figure 7.

L'ergot (3) dépasse au-dessus du profilé (7) car lors de l'assemblage, l'extrémité de face supérieure (7') du profilé est engagée dans l'espace (6) séparant l'ergot (3) du plan de la fenêtre (5). Une force de poussée selon la flèche F est exercée de manière à ce que l'ergot (3) découpe une encoche (8) à l'extrémité de la face supérieure (7') du profilé (7) grâce à ses arêtes vives située à sa base au niveau de son point d'attache à la fenêtre (5). La face inférieure du profilé (7") n'est évidemment pas affectée par l'ergot. La course de cette force F dépend de la distance D entre le point d'attache de l'ergot (3) et les butées (4, 4').

La longueur de l'encoche (8) correspondant à la distance (D) séparant le point d'attache de l'ergot (3) des butées (4, 4') dépend notamment de la longueur (L) de la fenêtre (5), de l'épaisseur de la matière du profilé (7) et de celle de la branche (2).

La matière découpée par l'ergot (3) en formant l'encoche (8) n'est pas éliminée pour autant, mais forme une languette (9) de dimensions sensiblement égales à celles de l'encoche (8). Cette languette (9) vient s'enrouler et remplir la fenêtre (5) sous l'ergot (3) comme illustré par la figure 4 représentant une vue coupe selon l'axe A-A de la branche de la figure 3. La forme de la partie inférieure de l'ergot (3) est adaptée pour servir de guide à la languette (9) au fur et à mesure de l'avancement du profilé (7) en direction des butées (4, 4') sous l'influence de la force F. L'extrémité de la face interne (7") du profilé (7) en regard de celle portant l'encoche (8) sert aussi de guide à la languette (9) lorsque le profilé (7) s'approche des butées (4, 4') afin de la faire remonter vers la face supérieure (7') du profilé (7).

L'assemblage se termine lorsque le profilé (7) a atteint les butées (4, 4'). La languette (9) s'appuie à la fois contre le point d'attache de l'ergot (3) à l'intérieur de la fenêtre (5), contre la paroi interne opposée audit point d'attache et contre la face interne de l'extrémité du profilé en regard de l'ergot (3) ou de l'encoche (8). De plus les côtés latéraux de la languette (9) s'appuient sur les côtés correspondants de l'intérieur de la fenêtre (5).

Ainsi, cette languette (9) forme un verrou efficace empêchant tout mouvement de la barre profilée (7) par rapport à l'élément de liaison (1). Un démontage de cet assemblage serait destructeur car le profilé (7) ne peut pas être retiré sans devoir le scier ou le déformer de manière à dégager la languette hors de la fenêtre.

Dans le domaine particulier de la construction de conduits de ventilation ces éléments de liaison (1) sont plans et comportent deux branches identiques (2a, 2b), portant chacune un ergot (3a, 3b), disposées à angle droit. Ces éléments de liaison (1) servent à assembler des barres profilées pour former des cadres (C) de fixation des conduits comme illustré par les figures 5, 6 et 7. Les butées (4a, 4a', 4b, 4b') de ces éléments de liaison (1) sont placées sur les branches (2a, 2b), de préférence, de manière à joindre les barres profilées (7) dans les angles internes du cadre (C), indiqués par (J) dans la figure 6. Cette disposition améliore l'étanchéité du cadre (C) et évite l'utilisation de pièces supplémentaires pour fermer ces angles. La largeur (E) des butées internes (4a', 4b') dans l'angle de l'élément de liaison sera de préférence égale à l'épaisseur de la matière des profilés qui seront fixés à chaque branche (2a, 2b). La largeur des butées (4a, 4b) externes sera de préférence la même que celle des butées internes (4a', 4b') afin d'aligner les tranches externes des éléments de liaison avec les cotés latéraux externes des profilés (7) formant le cadre (C). Un trou (T) percé dans le coin de l'élément de liaison est destiné au passage d'une vis lors de la jonction de deux cadres (C1, C2) respectivement de deux tronçons (V1, V2) de conduits de ventilation comme illustré par la figure 7.

Ces cadres (C, C1, C2) rectangulaires ou carrés délimitent des tronçons de conduits de ventilation (V1, V2) comportant des parois (P1, P2) en tôle d'acier. Les extrémités de ces parois (P1, P2) sont fixées dans les parties appropriées (p) des profilés (7) des cadres (C, C1, C2) au moyen de joints d'étanchéité, voir figures 6 et 7.

Les cadres servent essentiellement à relier deux tronçons (V1, V2) de conduit entre eux comme le montre l'exemple de la figure 7. Des vis, traversant les trous (T) dans le coin de chaque élément de liaison (1) de deux cadres (C1, C2) placés l'un en regard de l'autre, assurent le maintien de la jonction des deux tronçons (V1, V2). Les cadres (C, C1, C2) peuvent également servir à la fixation d'une extrémité d'un conduit à un cadre similaire appliqué contre une paroi autour d'un passage d'air ou autour d'une grille protégeant un ventilateur.

L'élément de liaison (1), selon la présente invention, est usuellement fabriqué entièrement par étampage dans une plaque d'acier. L'outil d'étampage forme en une seule étape le contour de l'élément, l'ergot (3), la fenêtre (5), les butées (4a, 4a', 4b, 4b'), le trou (T) et d'autres orifices et/ou reliefs si nécessaire.

## Revendications

1. Élément de liaison pour profilés métalliques sous forme d'une plaque métallique rigide plane d'épaisseur généralement constante comprenant au moins une branche (2) comportant des tranches (2', 2") parallèles prolongeant le plan de ladite plaque, ladite branche (2), étant destinée à s'emboîter dans une barre profilée (7) dont la forme de la section est adaptée à celle de la section de la branche (2) jusqu'à au moins une butée (4, 4') solidaire de la branche (2), comporte une fenêtre (5) sur un côté de laquelle est attaché un ergot (3) masquant ladite fenêtre (5), l'extrémité dudit ergot (3) étant orientée vers l'extrémité de la branche (2), **caractérisé**
**en ce que** la partie dudit ergot (3) recouvrant la fenêtre (5) est sensiblement parallèle au plan de la plaque laissant un espace (6) séparant ledit plan et la partie inférieure dudit ergot (3),
**en ce qu'**au moins la partie dudit ergot (3) attachée au côté de la fenêtre comporte des arêtes vives,
et **en ce que** le point d'attache dudit ergot (3) à la fenêtre (5) est situé entre la butée (4, 4') et l'extrémité de la branche (2) à une distance telle qu'une languette (9) pénétrant dans la fenêtre (5) est formée dans l'extrémité de la barre profilée (7) lors de l'assemblage de ladite barre (7) sur la branche (2).

2. Élément de liaison selon la revendication 1, **caractérisé en ce que** la distance (D) entre la butée (4, 4') et le point d'attache dudit ergot (3) à la fenêtre (5) correspond au moins à l'épaisseur de la plaque constituant ledit élément de liaison.

3. Élément de liaison selon la revendication 1, **caractérisé en ce que** la fenêtre (5) est localisée sensiblement sur l'axe de symétrie de la branche (2) et parallèlement aux tranches (2', 2") de ladite branche (2).

4. Élément de liaison selon la revendication 1, **caractérisé en ce que** la butée (4, 4') est formée par la différence de largeur entre la branche (2) comportant la fenêtre (5) et la partie restante de la plaque, ladite différence étant répartie symétriquement par rapport à l'axe de la branche (2).

5. Élément de liaison selon la revendication 1, **caractérisé en ce que** la largeur de l'espace (6) séparant la partie inférieure de l'ergot (3) du plan dudit élément (1) correspond à l'épaisseur du métal de la barre profilée (7) augmentée du jeu mécanique nécessaire à l'assemblage de ladite barre sur ledit élément.

6. Élément de liaison selon les revendications 1 à 5, **caractérisé en ce qu'**il comporte deux branches (2a, 2b) identiques placées à angle droit l'une par rapport à l'autre.

7. Élément de liaison selon la revendication 6, **caractérisé en ce qu'**il est destiné à l'assemblage d'un cadre (C) constituant les extrémités d'un tronçon de conduit de ventilation, ledit cadre (C) étant constitué de barres profilées (7) emboîtées dans chaque branche (2a, 2b) desdits éléments de liaison (1) formant les quatre coins dudit cadre (C).

8. Procédé d'assemblage et de verrouillage d'une barre profilée (7) sur l'élément de liaison (1) selon la revendication 1, ladite barre ayant une section dont tout ou partie de la forme correspond à la forme de la section de la branche (2) dudit élément de liaison (1) sur laquelle la barre est emboîtée lors d'une étape préliminaire **caractérisé en ce qu'**il comporte les étapes suivantes:
- engager la tranche de l'extrémité de la barre profilée (7) dans l'espace (6) séparant l'ergot (3) du plan de la fenêtre (5) jusqu'à ce que ladite tranche s'appuie sur le point d'attache de l'ergot (3) à la fenêtre (5),
- exercer une force de poussée F sur la barre profilée (7) contre ledit ergot (3), ladite force F entraînant la découpe d'une languette (9) dans la face (7') du profilé passant sous l'ergot (3), ladite languette (9) guidée par ledit ergot (3) s'enroule sur elle-même en se logeant dans la fenêtre (5) sous ledit ergot (3).

9. Procédé selon la revendication 8, **caractérisé en ce que** l'ergot (3) comportant des arêtes vives sur la partie attachée à la fenêtre (5) forme, sous l'influence de la force F de poussée, une encoche (8) à l'extrémité de la barre passant sous ledit ergot (3).

10. Procédé selon les revendications 8 et 9, **caractérisé en ce que** la force F de poussée est exercée sur une longueur correspondant à celle séparant le point d'attache de l'ergot (3) à la fenêtre (5) des butées (4, 4') de la branche (2).

11. Procédé selon la revendication 8, **caractérisé en ce qu'**il se termine lorsque la barre profilée (7) s'appuie sur les butées (4, 4') de la branche (2) de l'élément de liaison (1) engagée dans ladite barre et lorsque la languette (9) enroulée s'appuie contre la face intérieure (7") du profilé (7) en regard de l'ergot (3) et contre les bords intérieurs de la fenêtre (5).
